# EUROPÄISCHE PATENTSCHRIFT

(11) **EP 1 610 197 B1**
(45) Veröffentlichungstag und Bekanntmachung des Hinweises auf die Patenterteilung: **22.09.2010**
(21) Anmeldenummer: 05013392.5
(22) Anmeldetag: 21.06.2005
(51) Int. Cl.: H05B 37/02, G01J 1/04

(54) **Verfahren und System zum Regeln der Helligkeit in einem mit Innenlicht und Aussenlicht beleuchteten Raum**
Method and system for regulating the light intensity in a room illuminated by daylight and artificial light
Procédé et système pour régler la luminosité d'un local illuminé par la lumière du jour et par de la lumière artificielle

(30) Priorität: 22.06.2004 DE 102004030048
(43) Veröffentlichungstag der Anmeldung: 28.12.2005
(73) Patentinhaber: Zumtobel Aktiengesellschaft, 6850 Dornbirn (AT)
(72) Erfinder: Walter, Werner, Dr., 6850 Dornbirn (AT)
(74) Vertreter: Schmidt-Evers, Jürgen

(56) Entgegenhaltungen:
- EP-A- 0 652 690
- EP-A- 0 753 986
- DE-A1- 3 526 590
- DE-A1- 10 140 415
- US-A1- 2004 016 865

## Beschreibung

Die vorliegende Erfindung betrifft ein Verfahren zum Regeln der Helligkeit in einem mit Innenlicht und Außenlicht beleuchteten Raum. Ferner betrifft die vorliegende Erfindung ein System zur Durchführung des erfindungsgemäßen Verfahrens.

Ein zentraler Bestandteil des modernen Gebäudemanagements besteht in einer der Raumnutzung angepaßten Beleuchtungsregelung sowie einer Optimierung des hiermit verbundenen Energieverbrauchs. Um den Energieverbrauch zur Beleuchtung von Gebäuden zu senken, ist es unerlässlich, das zur Verfügung stehende und durch Fenster von außen einfallende Tageslicht mit einzubeziehen und zu nutzen. Es werden daher bereits seit längerem Beleuchtungssysteme entwickelt, bei denen die zur Verfügung stehenden Lichtquellen innerhalb eines Raumes derart angesteuert werden, dass gemeinsam mit dem Tageslicht eine gewünschte Beleuchtung eines Raumes erzielt werden kann. Beispielsweise kann mit derartigen Systemen erreicht werden, dass abhängig von dem zur Verfügung stehenden Außenlicht die Lichtquellen derart angesteuert werden, dass grundsätzlich im wesentlichen die gleiche Helligkeit in einem zu beleuchtenden Raum erzielt wird.

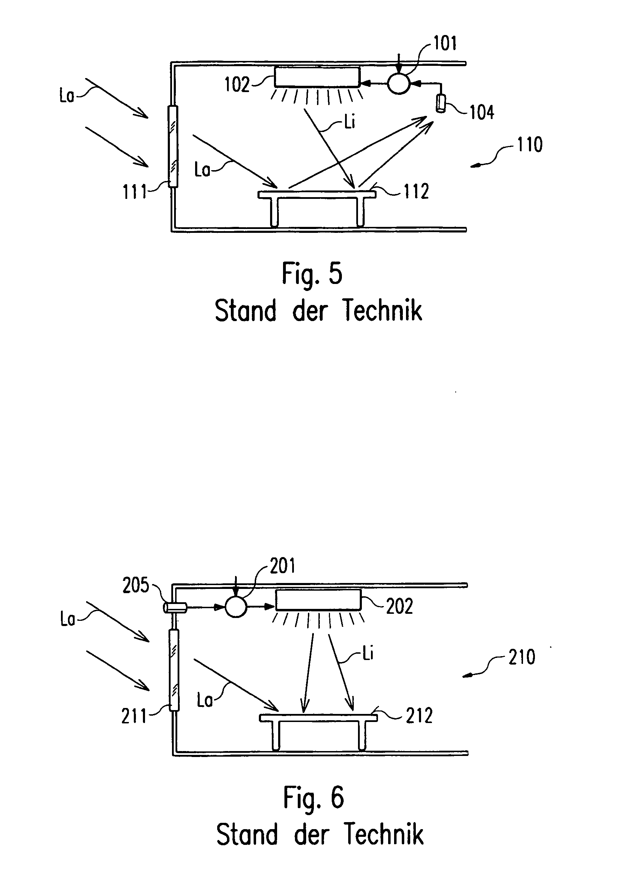

Die heute zur Verfügung stehenden Systeme zur tageslichtabhängigen Steuerung von Lichtquellen können grundsätzlich gesehen zwei verschiedenen Kategorien zugeordnet werden. Bei der ersten Kategorie handelt es sich um rückgekoppelte sog. Closed-Loop-Systeme, bei der zweiten Kategorie handelt es sich um algorithmisch gesteuerte sog. Open-Loop-Systeme. Beide Systeme weisen in der Praxis gewisse Nachteile auf, die nachfolgend anhand der Fig. 5 und 6 näher erläutert werden sollen.

Fig. 5 zeigt zunächst ein sog. Closed-Loop-System zur Ausleuchtung eines Raumes 110, der ein Fenster 111 aufweist, durch das Außenlicht La eintreten kann. Das bekannte System weist als zentrales Element eine Regeleinrichtung 101 auf, die eine Lichtquelle in Form einer Deckenleuchte 102 derart ansteuern soll, dass eine in dem Raum 110 angeordnete Arbeitsfläche 112 in gewünschter Weise ausgeleuchtet wird. Der Regeleinrichtung 101 kann hierzu bspw. mit Hilfe eines Dimmers von einem Benutzer ein Sollwert vorgegeben werden.

Wie der schematischen Darstellung in Fig. 5 entnommen werden kann, wird die Arbeitsfläche 112 sowohl von dem durch das Fenster 111 eintretenden Außenlicht La als auch durch das von der Leuchte 102 abgegebene Innenlicht Li beleuchtet. Mit Hilfe eines auf die Arbeitsfläche 112 gerichteten Sensors 104 wird nunmehr die an der Arbeitsfläche 112 tatsächlich vorliegende Gesamthelligkeit erfasst und als aktueller Istwert der Regeleinrichtung 101 zugeführt. Diese kann nun die Leistung der Lichtquelle 102 derart einstellen, dass eine gewünschte Gesamthelligkeit an der Arbeitsfläche 112 vorliegt. Mit Hilfe der durch die Rückkopplung über den Sensor 104 erzielten geschlossenen Regelschleife wird also erreicht, dass zumindest theoretisch gesehen die gewünschte Gesamthelligkeit zuverlässig eingestellt werden kann.

Das in Fig. 5 dargestellte rückgekoppelte Lichtsteuerungssystem führt zwar in einigen Fällen zu zufriedenstellenden Ergebnissen, in der Praxis können jedoch oftmals Schwierigkeiten auftreten. So bereiten bei diesem Closed-Loop-Verfahren insbesondere Kreuzeinflüsse von Nachbar-Regelkreisen und Veränderungen im Reflexionsverhalten der angesteuerten Arbeitsfläche Probleme. Befindet sich bspw. auf der Arbeitsfläche 112 ein Element, welches verstärkt Licht reflektiert, so führt dies dazu, dass ein Sensor 104 einen erhöhten Helligkeitswert als Istwert an die Regeleinrichtung 101 zurückführt, die dies wiederum dahingehend interpretiert, dass der Anteil des Außenlichts La angestiegen ist. Infolge dessen wird die Leuchte 102 herabgedimmt, was allerdings oftmals gar nicht erwünscht ist. Das zweite wesentliche Problem derartiger Lichtregelungssysteme kann dann auftreten, wenn in einem größeren Raum mehrere derartige Regelungssysteme angeordnet sind, bei denen das Licht einiger Lichtquellen der Systeme auch die auszuleuchtenden Bereiche benachbarter Systeme aufhellt. In diesem Fall ist eine zuverlässige Ausleuchtung der einer bestimmten Regeleinrichtung zugeordneten Arbeitsfläche in der gewünschten Helligkeit oftmals nicht erzielbar, da für die verantwortliche Regeleinrichtung gar nicht die Möglichkeit besteht, auf alle die Arbeitsfläche beleuchtenden Lichtquellen Einfluss zu nehmen. Vielmehr können sogar Instabilitäten in den Regelkreisen auftreten, welche sich in für den Benutzer störenden Helligkeitsschwankungen bemerkbar machen.

Die oben beschriebenen Nachteile eines Regelungssystems werden bei dem in Fig. 6 dargestellten Open-Loop-Verfahren umgangen. Das zur Ausleuchtung des Raums 210 vorgesehene System weist eine Steuereinrichtung 201 auf, die nunmehr allerdings nicht mit einem Sensor zum unmittelbaren Erfassen der an der auszuleuchtenden Arbeitsfläche 212 vorliegenden Gesamthelligkeit verbunden ist, sondern stattdessen die Signale eines Sensors 205 empfängt, der das Außenlicht La erfasst. Auf Basis der Informationen des Außenlichtsensors 205 ermittelt die Steuereinrichtung 201 anhand eines algorithmischen Verfahrens, auf welche Weise die Innenlichtquelle 202 anzusteuern ist, um eine in dem Raum 210 befindliche Arbeitsfläche 212 in gewünschter Weise auszuleuchten. Im Gegensatz zu dem Closed-Loop-Verfahren von Fig. 5 findet somit bei dem Open-Loop-Verfahren von Fig. 6 keine Regelung im eigentlichen Sinne statt, sondern stattdessen eine Steuerung der Lichtquelle 202 anhand der zur Verfügung stehenden Daten über das Außenlicht La.

Wie bereits erwähnt wurde, kann mit Hilfe des in Fig. 6 dargestellten Verfahrens vermieden werden, dass Kreuzeinflüsse von benachbarten Lichtsteuerungssystemen die Ausleuchtung der Arbeitsfläche negativ beeinflussen. Ferner kann auch das Problem vermieden werden, dass eine Änderung der Reflektivität der auszuleuchten Arbeitsfläche zu einer ungewollten Beeinflussung der Beleuchtung führt.

Auf der anderen Seite besteht beim Open-Loop-Verfahren allerdings der Nachteil, dass der Einfluss von lokalen Veränderungen auf die Außenhelligkeit, bspw. der Einsatz von Sonnenschutzblenden oder dergleichen sowie die Auswirkung von gerichtetem, direkten oder z.B. an Nachbargebäuden umgelenkten bzw. reflektierten Sonnenlicht sowie der Einfluss von veränderlicher Transmission, der bspw. durch Bäume und dergleichen hervorgerufen wird, nur schwer zu erfassen ist. Genau genommen erfordern die Open-Loop-Verfahren eine sehr genaue und an die spezifische Situation angepasste Programmierung der Steuereinrichtung 201, da unter anderem berücksichtigt werden muss, ob das durch das Fenster 211 einfallende Licht aus ungerichtetem diffusen Himmelslicht oder aus direkter gerichteter Sonnenstrahlung besteht. Dies bedeutet wiederum, dass für jeden Zeitpunkt bekannt sein muss, aus welcher Richtung die Sonnenstrahlung gerade auf das Fenster 211 fällt. Die Realisierung und Inbetriebnahme derartiger Systeme ist somit mit einem sehr hohen Aufwand verbunden.

Die europäische Patentanmeldung EP 0 652 690 A1 beschreibt eine Einrichtung zur automatischen Steuerung einer Beleuchtung eines Raumes, wobei bei einer Ausführungsform der Einrichtung sowohl interne Beleuchtungsmessungen, die zur Erfassung der Helligkeit im Raum dienen, als auch externe Beleuchtungsmessungen, die zur Erfassung des den Raum umgebenden Außenlichts dienen, die Beleuchtung des Raumes beeinflussen.

Der vorliegenden Erfindung liegt nunmehr die Aufgabe zugrunde, die bekannten Lichtregelungs- oder Lichtsteuerungssysteme derart weiter zu verbessern, dass die Installation und Inbetriebnahme des Systems deutlich vereinfacht ist und andererseits die Möglichkeiten zur gewünschten Ausleuchtung von Arbeitsflächen weiter verbessert werden.

Die Aufgabe wird durch ein System zum Regeln der Helligkeit in einem mit Innenlicht und Außenlicht beleuchteten Raum gemäß Anspruch 1 bzw. durch ein entsprechendes Verfahren zur Helligkeitsregelung gelöst.

Das System gemäß der vorliegenden Erfindung weist zunächst ebenso wie ein klassisches Closed-Loop-System mindestens eine zur Beleuchtung des Raumes bzw. einer Arbeitsfläche vorgesehene Lichtquelle, einen Innensensor zum Erfassen der in dem Raum bzw. an der Arbeitsfläche vorliegenden Helligkeit sowie eine Steuer-/Regeleinrichtung auf, welche in Abhängigkeit von dem Messsignal des Innensensors die Lichtquelle ansteuert. Zusätzlich weist das System auch einen Außensensor auf, der zum Erfassen des Außenlichts vorgesehen ist, wobei das Regelverhalten der Steuer-/Regeleinrichtung von dem Messsignals des Außensensors abhängig ist.

Das vorgeschlagene erfindungsgemäße System bzw. Verfahren kombiniert somit die Prinzipien der bekannten Closed-Loop-Systeme und Open-Loop-Systeme. In Folge hiervon wird zunächst die Installation und Inbetriebnahme des Systems im Vergleich zu einem klassischen Open-Loop-System deutlich vereinfacht, da nämlich - wie später noch näher erläutert wird - bei dem erfindungsgemäßen Verfahren eine detaillierte Programmierung der Steuer-/Regeleinrichtung, durch welche die Lage des Raumes bzw. der Fenster im Hinblick auf die Sonne berücksichtigt wird, nicht mehr erforderlich ist. Ferner kann mit Hilfe der vorliegenden Erfindung das Resultat bei der Beleuchtung eines Raumes bzw. einer Arbeitsfläche deutlich verbessert werden.

Kerngedanke des erfindungsgemäßen Steuer- und Regelungsverfahrens ist, dass die Steuer-/Regeleinrichtung auf Basis der Messsignale des Innensensors in bekannter Weise eine Regelung der in dem Raum bzw. an der zu beleuchtenden Arbeitsfläche vorliegenden Helligkeit vornimmt, indem sie die Lichtquelle auf Basis der von dem Innensensor gelieferten Messdaten ansteuert. Zusätzlich wird auf Basis der Informationen über das Außenlicht das Regelverhalten der Steuer-/Regeleinrichtung beeinflusst. Erfindungsgemäß ist hierbei nun vorgesehen, dass die Bandbreite des Ausgangssignals und/oder die Empfindlichkeit der Steuer-/Regeleinrichtung von der Intensität des Außenlichts abhängig ist, wobei insbesondere die Bandbreite des Ausgangssignals sowie die Empfindlichkeit der Steuer-/Regeleinrichtung bei Zunahme des nicht gerichteten diffusen Himmelslichts ansteigen können. Auf der anderen Seite kann vorgesehen sein, dass die Dynamik der Helligkeitsregelung bei Zunahme der gerichteten Sonnenstrahlung abnimmt. Wie später noch ausführlich erläutert wird, kann hierdurch in sehr einfacher und effektiver Weise der Einfluss des Außenlichts berücksichtigt werden. Insbesondere ist es hierbei allerdings nicht mehr erforderlich, zu berücksichtigen, aus welcher Richtung die gerichtete direkte Sonnenstrahlung auf den zu beleuchtenden Raum fällt. Die Inbetriebnahme des erfindungsgemäßen Systems wird somit deutlich vereinfacht, da entsprechende lokale Informationen über die Ausrichtung von Fenstern und dergleichen nicht mehr berücksichtigt werden müssen.

Als Sensoren für den Closed-Loop-Anteil des erfindungsgemäßen Steuer-/Regelungssystems können einfache, im wesentlichen auf die zu beleuchtende Arbeitsfläche gerichtete Sensoren verwendet werden. Als Sensoren für den algorithmischen gesteuerten Anteil der Regelung/Steuerung hingegen wird vorzugsweise ein Messkopf eingesetzt, der den Lichtbeitrag des Außenlichts aus unterschiedlichen Himmelsrichtungen mit ausreichender Qualität erfassen kann. Insbesondere ist der Außensensor vorzugsweise derart ausgebildet, dass er sowohl den Anteil des nicht-gerichteten diffusen Himmelslichts als auch den Anteil der gerichteten Sonnenstrahlung an dem Außenlicht erfassen kann. Der Außensensor kann hierzu z.B. eine oder mehrere Messzellen sowie ein Element zur zumindest teilweisen und/oder vorübergehenden Abschattung der Messzelle(n) aufweisen, wobei es sich bei dem Abschattungselement bspw. um einen bekannten sog. Schattenring handeln kann.

Neben der Gesamthelligkeit sowie der Außenhelligkeit kann als dritte Eingangsgröße für das erfindungsgemäße Steuer-/Regelungssystem ferner eine Einstellung durch einen Benutzer berücksichtigt werden, die bspw. vorgibt, mit welcher Gesamthelligkeit eine zu beleuchtende Arbeitsfläche ausgeleuchtet werden soll. In Erweiterung des oben beschriebenen erfindungsgemäßen Verfahrens kann somit ergänzend vorgesehen sein, dass durch einen Benutzer bestimmte Sollwerte für die Ausleuchtung einer zu beleuchtenden Arbeitsfläche vorgegeben werden. Hierbei kann allerdings vorgesehen sein, dass die Auswirkung einer Benutzereingabe von dem aktuellen Zustand des Aussenlichts abhängt. So ist beispielsweise für den Fall, dass eine Veränderung durch den Benutzer bei einem hohen Anteil gerichteter Sonnenstrahlung vorgenommen wird, vorgesehen, dass dies von der Steuer-/Regeleinrichtung dahingehend interpretiert wird, dass die Helligkeit analog zu dem Anteil der direkten Sonnenstrahlung verändert werden soll, um einen im Vergleich zum Außenlichts vorgegebenen Kontrast beizubehalten.

In einer Grundversion besteht ein einzelnes Steuer-/Regelungssystem der vorliegenden Erfindung aus einer Steuer-/Regeleinrichtung sowie einem dazugehörigen Innen- und Außensensor. Es kann allerdings auch vorgesehen sein, dass mehrere Steuer-/Regelungssysteme vorgesehen sind, die auf die Messdaten eines gemeinsamen zentralen Außensensors zugreifen können. In diesem Fall erfolgt die Übermittlung der Messsignale vorzugsweise drahtlos, wodurch eine besonders einfache Inbetriebnahme der Systeme erzielt wird.

Nachfolgend soll die Erfindung anhand der beiliegenden Zeichnung näher erläutert werden. Es zeigen:
- Fig. 1: ein erstes Ausführungsbeispiel eines erfindungsgemäßen Systems zum Regeln der Helligkeit in einem mit Innen- und Außenlicht beleuchteten Raum;
- Fig. 2: ein zweites Ausführungsbeispiel mehrerer in einem Gebäude angeordneter erfindungsgemäßen Systeme;
- Fig. 3a und 3b: verschiedene Ansichten eines in dem erfindungsgemäßen System zum Einsatz kommenden Sensors zum Erfassen des Außenlichts;
- Fig. 4: eine schematische Darstellung der Eingangs- und Ausgangssignale der erfindungsgemäßen Steuer-/Regeleinrichtung und
- Fig. 5 und 6: zwei aus dem Stand der Technik bekannte Regelungs- bzw. Steuerungssysteme zum Verändern der Helligkeit in einem Raum.

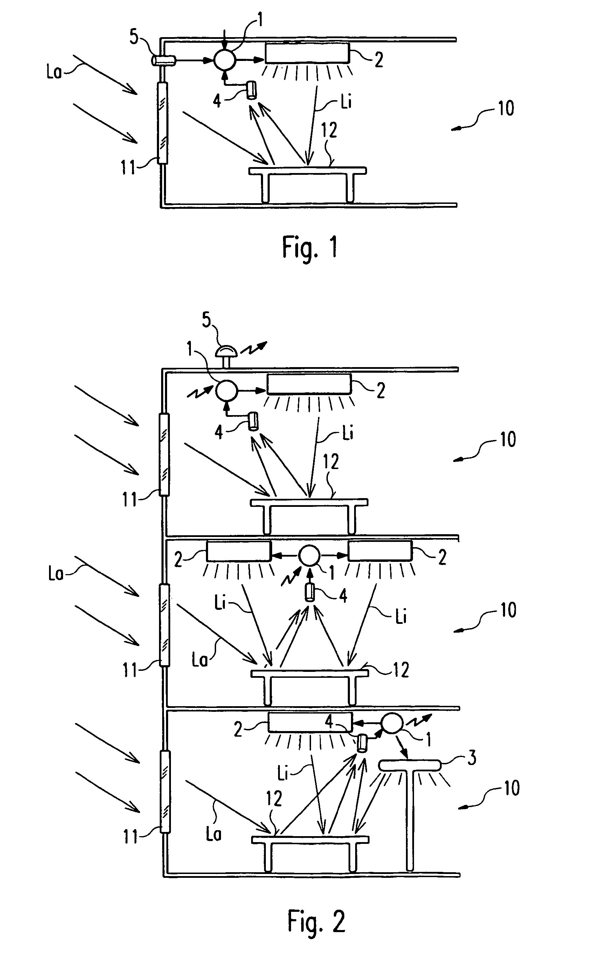

Die vorliegende Erfindung kombiniert - wie bereits erwähnt - die Eigenschaften von Closed-Loop- und Open-Loop-Systemen zur Steuerung bzw. Regelung von Lichtquellen. Das in Fig. 1 dargestellte erste Ausführungsbeispiel eines erfindungsgemäßen Systems zur Beleuchtung einer in einem Raum 10 befindlichen Arbeitsfläche 12 weist somit als wesentliche Elemente eine Steuer-/Regeleinrichtung 1 zur Ansteuerung einer Lichtquelle in Form einer Deckenleuchte 2 sowie zwei Sensoren. 4 und 5 auf, die zum einen zum Erfassen der an der Arbeitsfläche 12 vorliegenden Gesamthelligkeit und zum anderen zum Erfassen des durch das Fenster 11 in den Raum 10 einfallenden Außenlichts La vorgesehen sind.

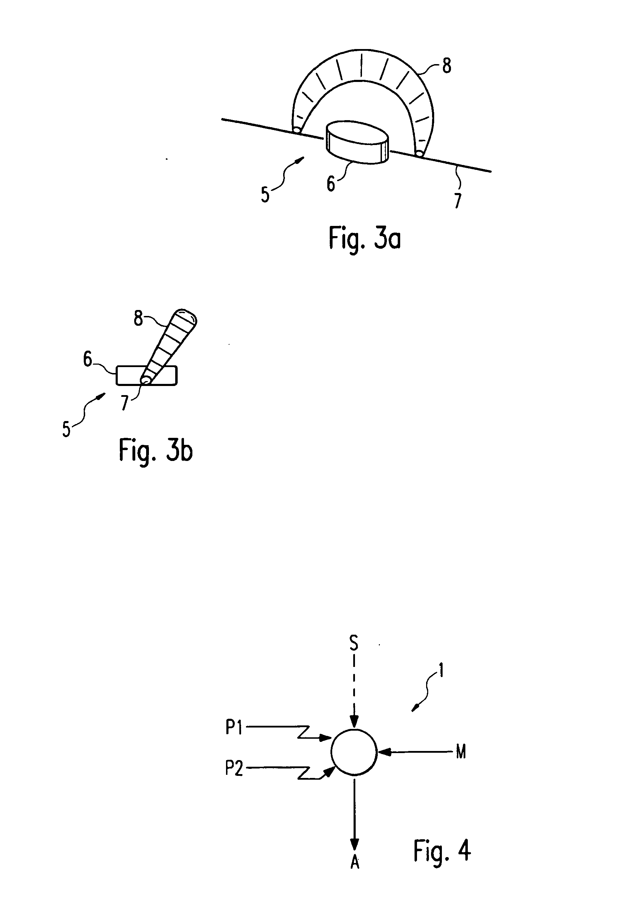

Bei dem Innensensor 4, der Bestandteil des Closed-Loop-Anteils des erfindungsgemäßen Systems ist, handelt es sich vorzugsweise um einen einfachen Helligkeitssensor, der im wesentlichen auf die zu beleuchtende Arbeitsfläche 12 gerichtet ist. Der zweite Sensor 5 zum Erfassen des Außenlichts La hingegen ist vorzugsweise derart ausgestaltet, dass er zumindest in der Lage ist, den Anteil des nicht-gerichteten diffusen Himmelslichts und getrennt hiervon den Anteil der gerichteten direkten Sonnenstrahlung an dem Außenlicht La zu erfassen. Hierfür kann bspw. ein Sensor verwendet werden, wie er schematisch in den Fig. 3a und 3b dargestellt ist. Dieser Sensor 5 weist als zentrales Element eine Messezelle 6 bzw. eine Anordnung mehrerer Messzellen auf, die an einer Halterung 7 befestigt ist. Die Messzelle(n) 5 erfasst bzw. erfassen das aus den verschiedenen Richtungen einfallende Außenlicht, wobei allerdings ein sog. Schattenring 8 vorgesehen ist, der die Messzelle(n) 6 zumindest teilweise und/oder vorübergehend abschattet. Hierdurch ist es möglich, zwischen einer direkt auf die Messzelle(n) 6 einfallenden gerichteten Sonnenstrahlung und dem diffusen Himmelslicht, dass durch eine Streuung der Sonnenstrahlung in der Atmosphäre hervorgerufen wird, zu unterscheiden. Die Unterscheidung zwischen direkter Sonnenstrahlung und diffusem Himmelslicht ist dabei deshalb von Bedeutung, da beide Lichtsorten unterschiedliche dynamische Eigenschaften aufweisen, die bei der erfindungsgemäßen Realisierung der Lichtregelung berücksichtigt werden sollten.

Wie in Fig. 4 schematisch dargestellt ist, werden somit der Steuer-/Regeleinrichtung 1 mehrere unterschiedliche Eingangssignale zur Verfügung gestellt. Zunächst wird über den Außensensor ein Parameter P1 ermittelt, der dem nicht-gerichteten diffusen Himmelslicht entspricht bzw. proportional zu diesem ist. Ein zweiter Eingangsparameter P2 stammt ebenfalls von dem Außensensor und ist proportional zur gerichteten Sonnenstrahlung. Ein dritter Eingangswert M stammt schließlich von dem Innensensor, der auf die zu beleuchtende Arbeitsfläche 12 gerichtet ist. Die Steuerung des Ausgangswerts A, der die Helligkeit der Lichtquelle 2 und damit letztendlich die Ausleuchtung der zu beleuchtenden Arbeitsfläche 12 bestimmt, erfolgt nun nach Grundsätzen, die nachfolgen zusammengefaßt werden sollen.

Grundsätzlich gesehen führt die Steuer-/Regeleinrichtung 1 über den Closed-Loop-Kreislauf eine Regelung durch, d.h., der Ausgangswert A wird in Abhängigkeit von dem Istwert M derart angesteuert, dass eine gewünschte Ausleuchtung der Arbeitsfläche erzielt wird. Dieser Regelvorgang wird nun allerdings durch die von dem Außensensor stammenden Meßsignale beeinflußt. So bestimmt der Parameter P1, der dem nicht-gerichteten diffusen Himmelslicht entspricht, erfindungsgemäß, in welcher Bandbreite sich das Ausgangssignal A bewegt. Für sehr kleine Werte von P1 wird A auf 100% gehalten bzw. darf sich kaum ändern, was damit gleichbedeutend ist, dass für den Fall, dass kein Außenlicht zur Verfügung steht, die Arbeitsfläche 12 grundsätzlich mit maximaler Helligkeit ausgeleuchtet werden soll.

Mit zunehmendem Außenlicht kann sich allerdings A in einem immer breiteren Band bewegen, wobei das Ausgangssignal A für die Lichtquelle in der durch die Außenhelligkeit vorgegebenen Bandbreite direkt durch das Messsignal M des Innensensors gesteuert wird. Gemäß einem besonders bevorzugten Ausführungsbeispiel bestimmt dabei der Eingangswert P1 zusätzlich auch die Verstärkung von M, was zur Folge hat, dass mit zunehmendem P1 und damit verfügbaren diffusen Tageslicht der Einfluss der lokal gemessenen Größe M, d.h. der tatsächlich an der Arbeitsfläche vorliegenden Helligkeit zunimmt.

Über den zweiten Parameter P2 hingegen, der der direkten Sonnenstrahlung entspricht, wird die Zeitkonstante der Helligkeitsregelung eingestellt. Insbesondere kann vorgesehen sein, dass bei großem P2, d.h. für den Fall, dass viel gerichtetes Sonnenlicht zur Verfügung steht, die Zeitkonstante für die Regelung erhöht wird. Dies ist deshalb von Vorteil, da das direkte Sonnenlicht in hohem Maße variabel ist, sich also rasch ändern kann. Würde in diesem Fall die Zeitkonstante der Regelung klein sein, so würde das System parallel zu jeder Änderung der direkten Sonnenstrahlung unmittelbar eine Änderung in der Helligkeit der Lichtquelle vornehmen, was mitunter - z.B. bei einem teilweise bewölktem Himmel - als störend empfunden wird. Dieser Effekt wird nunmehr dadurch vermieden, dass aufgrund einer verlängerten Zeitkonstante für die Regelung die Lichtanpassung zeitlich verzögert wird.

Wesentlich bei dem soeben beschriebenen Verfahren zur Anpassung der Helligkeit der Lichtquelle für das Innenlicht ist somit, dass die Informationen über das zur Verfügung stehende Außenlicht nicht unmittelbar zu einer Änderung des Ausgangssignals A für die Lichtquelle führen sondern stattdessen lediglich das Regelverhalten der Closed-Loop-Schleife beeinflussen. Der Vorteil dieser Vorgehensweise besteht darin, dass es nun nicht mehr erforderlich ist, zu berücksichtigen, aus welcher Richtung genau die direkte Sonnenstrahlung auf das Fenster bzw. den zu beleuchtenden Raum fällt. Vielmehr ist die Unterscheidung zwischen dem Anteil an direkter Sonnenstrahlung und diffusem Himmelslicht ausreichend, so dass die Informationen über das Außenlicht nun nicht mehr in einem komplizierten algorithmischen Verfahren in ein Steuersignal für die Lichtquelle umgesetzt werden müssen. Dies bedeutet allerdings, dass der Aufwand zur Inbetriebnahme des erfindungsgemäßen Systems im Vergleich zu bekannten Open-Loop-Systemen deutlich reduziert. Gleichzeitig kann im Vergleich zu einfachen Closed-loop-Systemen eine deutliche Verbesserung des Ergebnisses erzielt werden.

Bei dem bislang beschriebenen Verfahren zur Steuerung der Lichtquelle war nicht berücksichtigt worden, dass auch die Möglichkeit bestehen sollte, manuell einen gewünschten Sollwert für die Helligkeit der auszuleuchtenden Arbeitsfläche vorzugeben. Gemäß der Darstellung in Fig. 5 kann allerdings durchaus vorgesehen sein, dass der Regeleinrichtung 1 mit Hilfe eines weiteren Eingangssignals S manuell ein bestimmter Helligkeitswert für die Arbeitsfläche vorgegeben wird. In diesem Fall wird bei einer manuellen Veränderung des Eingangssignals S bei niedrigen P1-Werten, d.h. bei niedriger Außenhelligkeit, der 100%-Wert für das Ausgangssignal A neu definiert. Mit anderen Worten, bei niedriger Außenhelligkeit führt eine manuelle Eingabe durch einen Benutzer unmittelbar zu einer Veränderung des Ansteuersignals für die Lichtquelle. Der Benutzer kann in diesem Fall also unmittelbar die in dem Raum bzw. an der Arbeitsfläche vorliegende Helligkeit steuern.

Wird allerdings das Eingangssignal S zu einem Zeitpunkt erhöht, zu dem ein hoher Anteil direkter Sonnenstrahlung vorliegt, zu dem also der P2-Wert hoch ist, so wird gemäß einem besonders bevorzugten Ausführungsbeispiel der Anteil von P2 in Zukunft als entsprechende Reduktion des Einflusses des Werts P1 interpretiert und dementsprechend die Einflussbandbreite von dem Signal M des Innensensors auf das Ausgangssignal A reduziert. Der Grund für diese Maßnahme ist, dass bei intensiver Sonnenstrahlung das Regelungssystem im Raum das von der Lichtquelle zur Verfügung gestellte Licht normalerweise reduzieren würde. In dem Raum befindliche Personen könnten dies allerdings derart empfinden, dass es nunmehr zu dunkel ist, da ihr Kontrastempfinden eine höhere Helligkeit im Raum verlangt. Um dies auszugleichen, wird der Benutzer manuell den Sollwert für das Innenlicht erhöhen.

Wenn in einem solchen Fall dann allerdings der Anteil der direkten Sonnenstrahlung wieder zurückgeht, so würde in dem Raum eine zu hohe Helligkeit vorliegen. Durch die oben beschriebene Maßnahme wird nun erreicht, dass das ursprüngliche Verhältnis zwischen Außenlicht und Innenhelligkeit in etwa beibehalten wird, indem parallel zu einer abnehmenden direkten Sonnenstrahlung auch der Anteil des Innenlichts reduziert wird. Im Endeffekt bedeutet dies, dass eine Veränderung des Eingangssignals S durch den Benutzer bei einem hohen Anteil direkter Sonnenstrahlung nicht zu einer unmittelbaren Veränderung der Innenhelligkeit führt, sondern stattdessen lediglich ein neues Verhältnis zwischen Innen- und Außenlicht vorgegeben wird, welches dann von der Steuereinrichtung bei einer späteren Veränderung der Außenhelligkeit automatisch beibehalten wird. Sollte hingegen der Benutzer trotz allem eine unmittelbare Veränderung der Helligkeit wünschen, so könnte vorgesehen sein, dass er dies durch eine besondere Eingabe an einem Bediengerät des Systems signalisiert, bspw. durch einen Doppelklick eines zur manuellen Lichtsteuerung vorgesehenen Schalters.

Eine Erweiterung des in Fig. 1 dargestellten erfindungsgemäßen Systems ist in Fig. 2 dargestellt, die ein mehrstöckiges Gebäude mit mehreren Steuer-/Regelungssystemen zeigt. Wesentlich bei dieser zweiten Variante ist, dass lediglich ein einziger zentraler Außensensor 5 zur Erfassung des Außenlichts La vorgesehen ist, dessen Messdaten sämtlichen Steuer-/Regelungssystemen zur Verfügung gestellt werden. Dies kann insbesondere auch durch eine drahtlose Übermittlung der Meßsignale erfolgen, wodurch der Aufwand zur Installation der Systeme nochmals deutlich reduziert wird. Letztendlich ist der Aufwand zur Installation der Systeme nicht wesentlich größer als derjenige zur Anordnung einer gleichen Anzahl von Closed-Loop-Systemen. Der geringe Mehraufwand für die Installation des zentralen Außenlichtsensors hingegen wird durch die erzielten Vorteile bei der Helligkeitssteuerung bei weitem wettgemacht.

Wie ferner der Darstellung in Fig. 2 entnommen werden kann, kann auch vorgesehen sein, dass die Regeleinrichtung 1 nicht nur eine einzige Lichtquelle sondern mehrere Lichtquellen, die - wie die unterste Variante zeigt - auch unterschiedlicher Art sein können, ansteuert. Beispielsweise kann vorgesehen sein, dass die Regeleinrichtung 1 sowohl eine Deckenleuchte 2 als auch eine Stehleuchte 3 ansteuert. In allen Fällen führt allerdings die Regeleinrichtung 1 eine individuelle Ansteuerung der ihr zugeordneten Lichtquellen 2 bzw. 3 durch, wobei die Regelung mit Hilfe der Innensensoren durch die Informationen über das Außenlicht La in der oben beschriebenen Weise modifiziert werden.

Insgesamt wird somit durch die vorliegende Erfindung ein verhältnismäßig kostengünstiges System zur Regelung der in einem Raum vorliegenden Helligkeit geschaffen, bei dem einerseits die Installation und Inbetriebnahme vereinfacht ist und welches andererseits deutliche Vorteile in der erzielten Helligkeitssteuerung aufweist.

## Patentansprüche

1. System zum Regeln der Helligkeit in einem mit Innenlicht (Li) und Außenlicht (La) beleuchteten Raum (10), mit
• mindestens einer zur Beleuchtung des Raums (10) vorgesehenen Lichtquelle (2, 3),
• einem Innensensor (4) zum Erfassen der in dem Raum vorliegenden Helligkeit,
• einem Außensensor (5) zum Erfassen des Außenlichts (La), sowie
• einer Steuer-/Regeleinrichtung (1), welche in Abhängigkeit von dem Messsignal des Innensensors (4) die Lichtquelle (2, 3) ansteuert, wobei das Regelverhalten der Steuer-/Regeleinrichtung (1) von dem Messsignal des Außensensor (5) abhängig ist,
**dadurch gekennzeichnet,**
**dass** die Bandbreite des Ausgangssignals (A) und/oder die Empfindlichkeit der Steuer-/Regeleinrichtung (1) von der Intensität des Außenlichts (La) abhängig ist.

2. System nach Anspruch 1,
**dadurch gekennzeichnet,**
**dass** der Außensensor (5) dazu ausgebildet ist, sowohl den Anteil des nicht gerichteten diffusen Himmelslichts (P1) als auch den Anteil der gerichteten Sonnenstrahlung (P2) an dem Außenlicht (La) zu ermitteln.

3. System nach Anspruch 2,
**dadurch gekennzeichnet,**
**dass** der Außensensor (5) eine oder mehrere Messzellen (6) sowie ein Element (7) zur zumindest teilweisen und/oder vorübergehenden Abschattung der Messzelle(n) (6) aufweist.

4. System nach Anspruch 3,
**dadurch gekennzeichnet,**
**dass** das Element zur Abschattung durch einen Schattenring (7) gebildet ist.

5. System nach einem der Ansprüche 2 bis 4,
**dadurch gekennzeichnet,**
**dass** die Bandbreite des Ausgangssignals (A) der Steuer-/Regeleinrichtung (1) sowie deren Empfindlichkeit bei Zunahme des nicht gerichteten diffusen Himmelslichts (P1) ansteigt.

6. System nach Anspruch 5,
**dadurch gekennzeichnet,**
**dass** die Dynamik der Steuer-/Regeleinrichtung (1) bei Zunahme der gerichteten Sonnenstrahlung (P2) abnimmt.

7. System nach einem der vorherigen Ansprüche,
**gekennzeichnet durch**
Mittel zur manuellen Verstellung eines Helligkeitssollwerts (S) für die Steuer-/Regeleinrichtung (1).

8. System nach Anspruch 7,
**dadurch gekennzeichnet,**
**dass** die Steuer-/Regeleinrichtung (1) nach einer Verstellung des Helligkeitssollwerts (S) bei hoher gerichteter Sonnenstrahlung (P2) das Ausgangssignals (A) parallel zu einer späteren Veränderung der gerichteten Sonnenstrahlung (P2) verändert.

9. System nach Anspruch 8,
**dadurch gekennzeichnet,**
**dass** die Steuer-/Regeleinrichtung (1) das Ausgangssignals (A) derart verändert, dass das Verhältnis zwischen dem Außenlicht (La) und der in dem Raum vorliegenden Helligkeit im Wesentlichen beibehalten wird.

10. System nach einem der vorherigen Ansprüche,
**dadurch gekennzeichnet,**
**dass** der Innensensor (4) und/oder Außensensor (5) mit der Steuer-/Regeleinrichtung (1) über eine Leitung verbunden ist.

11. System nach einem der vorherigen Ansprüche,
**dadurch gekennzeichnet,**
**dass** zumindest die Übertragung der Daten eines der beiden Sensoren (4, 5) zur der Steuer-/Regeleinrichtung (1) drahtlos erfolgt.

12. System nach einem der vorherigen Ansprüche,
**dadurch gekennzeichnet,**
**dass** dieses mehrere Regelkreise mit jeweils einer Steuer-/Regeleinrichtung (1) sowie einem der Steuer-/Regeleinrichtung (1) zugeordneten Innensensor (4) aufweist,
wobei ein gemeinsamer Außensensor (5) für alle Regelkreise vorgesehen ist.

13. Verfahren zum Steuern und Regeln der Helligkeit in einem mit Innenlicht (Li) und Außenlicht (La) beleuchteten Raum (10),
wobei eine zur Beleuchtung des Raums vorgesehene Lichtquelle (2, 3) in Abhängigkeit von der in dem Raum (10) vorliegenden Helligkeit angesteuert wird und zusätzlich das Außenlicht (La) erfasst wird, wobei das Regelverhalten von dem erfassten Außenlicht (La) abhängig ist,
**dadurch gekennzeichnet,**
**dass** die Bandbreite des Ausgangssignals zur Ansteuerung der Lichtquelle (2, 3) und/oder die Empfindlichkeit der Regelung von der Intensität des Außenlichts (La) abhängig ist.

14. Verfahren nach Anspruch 13,
**dadurch gekennzeichnet,**
**dass** sowohl der Anteil des nicht gerichteten diffusen Himmelslichts (P1) als auch der Anteil der gerichteten Sonnenstrahlung (P2) an dem Außenlicht (La) ermittelt wird.

15. Verfahren nach Anspruch 14,
**dadurch gekennzeichnet,**
**dass** die Bandbreite des Ausgangssignals zur Ansteuerung der Lichtquelle (2, 3) sowie die Empfindlichkeit der Regelung bei Zunahme des nicht gerichteten diffusen Himmelslichts (P1) ansteigt.

16. Verfahren nach Anspruch 15,
**dadurch gekennzeichnet,**
**dass** die Dynamik der Regelung bei Zunahme der gerichteten Sonnenstrahlung (P2) abnimmt.

17. Verfahren nach einem der Ansprüche 13 bis 16,
**dadurch gekennzeichnet,**
**dass** ein Helligkeitssollwert (S) für die Regelung manuell vorgebbar ist.

18. Verfahren nach Anspruch 17,
**dadurch gekennzeichnet,**
**dass** nach einer Verstellung des Helligkeitssollwerts (S) bei hoher gerichteter Sonnenstrahlung (P2) das Ausgangssignals (A) zur Ansteuerung der Lichtquelle (2, 3) parallel zu einer späteren Veränderung der gerichteten Sonnenstrahlung (P2) verändert wird.

19. Verfahren nach Anspruch 18,
**dadurch gekennzeichnet,**
**dass** das Ausgangssignals (A) zur Ansteuerung der Lichtquelle (2, 3) derart verändert wird, dass das Verhältnis zwischen dem Außenlicht (La) und der in dem Raum vorliegenden Helligkeit im wesentlichen beibehalten wird.

## Claims

1. A system for regulating the light intensity in a room (10) illuminated by daylight (La) and artificial light (Li), with
• at least one light source (2, 3) which is provided to illuminate the room (10),
• an interior sensor (4) to capture the light intensity present in the room,
• an exterior sensor (5) to capture the daylight (La), and
• a controller/regulator (1), which controls the light source (2, 3) depending on the measurement signal of the interior sensor (4), the regulating behaviour of the controller/regulator (1) depending on the measurement signal of the exterior sensor (5),
**characterized in that**
the bandwidth of the output signal (A) and/or the sensitivity of the controller/regulator (1) depend on the intensity of the daylight (La).

2. A system according to Claim 1,
**characterized in that**
the exterior sensor (5) is in a form to determine both the proportion of undirected diffuse sky light (P1) and the proportion of directional solar radiation (P2) in the daylight (La).

3. A system according to Claim 2,
**characterized in that**
the exterior sensor (5) has one or more measuring cells (6) and an element (7) for at least partially and/or temporarily shading the measuring cell(s) (6).

4. A system according to Claim 3,
**characterized in that**
the element for shading is in the form of a shading ring (7).

5. A system according to one of Claims 2 to 4, **characterized in that**
the bandwidth of the output signal (A) of the controller/regulator (1) and its sensitivity rise as the undirected diffuse sky light (P1) increases.

6. A system according to Claim 5,
**characterized in that**
the dynamic behaviour of the controller/regulator (1) decreases as the directional solar radiation (P2) increases.

7. A system according to any one of the preceding claims,
**characterized by**
means for manual adjustment of a light intensity setpoint value (S) for the controller/regulator (1).

8. A system according to Claim 7,
**characterized in that**
the controller/regulator (1), after an adjustment of the light intensity setpoint value (S), with high directional solar radiation (P2), changes the output signal (A) in parallel with a later change of the directional solar radiation (P2).

9. A system according to Claim 8,
**characterized in that**
the controller/regulator (1) changes the output signal (A) in such a way that the ratio between the daylight (La) and the light intensity which is present in the room is essentially retained.

10. A system according to any one of the preceding claims,
**characterized in that**
the interior sensor (4) and/or exterior sensor (5) are connected to the controller/regulator (1) via one line.

11. A system according to any one of the preceding claims,
**characterized in that**
at least the transmission of the data of one of the two sensors (4, 5) to the controller/regulator (1) takes place wirelessly.

12. A system according to any one of the preceding claims,
**characterized in that**
it has multiple control circuits, each with a controller/regulator (1), and an interior sensor (4) associated with the controller/regulator (1),
a common exterior sensor (5) being provided for all control circuits.

13. A method for controlling and regulating the light intensity in a room (10) illuminated by daylight (La) and artificial light (Li),
a light source (2, 3) which is provided to illuminate the room being controlled depending on the light intensity which is present in the room (10), and additionally the daylight (La) being captured, the regulating behaviour depending on the captured daylight (La),
**characterized in that**
the bandwidth of the output signal for controlling the light source (2, 3) and/or the sensitivity of the regulation depend on the intensity of the daylight (La).

14. A method according to Claim 13,
**characterized in that**
both the proportion of undirected diffuse sky light (P1) and the proportion of directional solar radiation (P2) in the daylight (La) are determined.

15. A method according to Claim 14,
**characterized in that**
the bandwidth of the output signal for controlling the light source (2, 4) and the sensitivity of the regulation rise as the undirected diffuse sky light (P1) increases.

16. A method according to Claim 15,
**characterized in that**
the dynamic behaviour of the regulation decreases as the directional solar radiation (P2) increases.

17. A method according to any one of Claims 13 to 16,
**characterized in that**
a light intensity setpoint value (S) for regulation can be preset manually.

18. A method according to Claim 17,
**characterized in that**
after an adjustment of the light intensity setpoint value (S), with high directional solar radiation (P2), the output signal (A) for controlling the light source (2, 3) is changed in parallel with a later change of the directional solar radiation (P2).

19. A method according to Claim 18,
**characterized in that**
the output signal (A) for controlling the light source (2, 3) is changed in such a way that the ratio between the daylight (La) and the light intensity which is present in the room is substantially retained.

## Revendications

1. Système pour régler la luminosité dans un local (10) éclairé avec de la lumière intérieure (Li) et de la lumière extérieure (La), comprenant
- au moins une source de lumière (2, 3) prévue pour l'éclairage du local (10),
- un capteur intérieur (4) pour l'enregistrement de la luminosité présente dans le local;
- un capteur extérieur (5) pour l'enregistrement de la lumière extérieure (La), et
- un dispositif de commande/réglage (1), qui active la source de lumière (2, 3) en fonction du signal de mesure du capteur intérieur (4) le comportement au réglage du dispositif de commande/réglage (1) étant dépendant du signal de mesure du capteur extérieur (5),
**caractérisé en ce que**
la largeur de bande du signal de sortie (A) et/ou la sensibilité du dispositif de commande/réglage (1) est/sont dépendante(s) de l'intensité de la lumière extérieure (La).

2. Système selon la revendication 1,
**caractérisé en ce que**
le capteur extérieur (5) est conçu pour déterminer aussi bien la part de la lumière du ciel (P1) diffuse non dirigée que la part de l'ensoleillement (P2) dirigé dans la lumière extérieure (La).

3. Système selon la revendication 2,
**caractérisé en ce que**
le capteur extérieur (5) présente une ou plusieurs cellules de mesure (6) et un élément (7) pour la projection d'ombre au moins partielle et/ou provisoire sur la (les) cellule(s) de mesure (6).

4. Système selon la revendication 3,
**caractérisé en ce que**
l'élément pour la projection d'ombre est formé par une bague d'ombre (7).

5. Système selon l'une quelconque des revendications 2 à 4,
**caractérisé en ce que**
la largeur de bande du signal de sortie (A) du dispositif de commande/réglage (1) et sa sensibilité augmentent en cas d'accroissement de la lumière du ciel (P1) diffuse non dirigée.

6. Système selon la revendication 5,
**caractérisé en ce que**
la dynamique du dispositif de commande/réglage (1) diminue en cas d'accroissement de l'ensoleillement (P2) dirigé.

7. Système selon l'une quelconque des revendications précédentes,
**caractérisé par**
des moyens pour le réglage manuel d'une valeur de consigne de luminosité (S) pour le dispositif de commande/réglage (1).

8. Système selon la revendication 7,
**caractérisé en ce que**
le dispositif de commande/réglage (1) modifie après un déplacement de la valeur de consigne de luminosité (S) en cas d'ensoleillement (P2) dirigé élevé, le signal de sortie (A) parallèlement à une variation ultérieure de l'ensoleillement (P2) dirigé.

9. Système selon la revendication 8,
**caractérisé en ce que**
le dispositif de commande/réglage (1) modifie le signal de sortie (A) de telle sorte que le rapport entre la lumière extérieure (La) et la luminosité présente dans le local soit conservé pour l'essentiel.

10. Système selon l'une quelconque des revendications précédentes,
**caractérisé en ce que**
le capteur intérieur (4) et/ou le capteur extérieur (5) est/sont relié(s) au dispositif de commande/réglage (1) au moyen d'une ligne.

11. Système selon l'une quelconque des revendications précédentes,
**caractérisé en ce que**
au moins la transmission des données de l'un des deux capteurs (4, 5) au dispositif de commande/réglage (1) se fait sans fil.

12. Système selon l'une quelconque des revendications précédentes,
**caractérisé en ce que**
ce système présente plusieurs circuits de réglage comprenant chacun un dispositif de commande/réglage (1) et un capteur intérieur (4) attribué au dispositif de commande/réglage (1),
un capteur extérieur (5) commun étant prévu pour tous les circuits de réglage.

13. Procédé pour commander et régler la luminosité dans un local (10) éclairé avec de la lumière intérieure (Li) et de la lumière extérieure (La),
une source de lumière (2, 3) prévue pour l'éclairage du local étant activée en fonction de la luminosité présente dans le local (10) et la lumière extérieure (La) étant enregistrée en supplément, le comportement au réglage étant dépendant de la lumière extérieure (La) enregistrée,
**caractérisé en ce que**
la largeur de bande du signal de sortie pour l'activation de la source de lumière (2, 3) et/ou la sensibilité du réglage est/sont dépendante(s) de l'intensité de la lumière extérieure (La).

14. Procédé selon la revendication 13,
**caractérisé en ce que**
aussi bien la part de la lumière du ciel (P1) diffuse non dirigée que la part de l'ensoleillement (P2) dirigé dans la lumière extérieure (La) sont déterminées.

15. Procédé selon la revendication 14,
**caractérisé en ce que**
la largeur de bande du signal de sortie pour l'activation de la source de lumière (2, 3) et la sensibilité du réglage augmentent en cas d'accroissement de la lumière du ciel (P1) diffuse non dirigée.

16. Procédé selon la revendication 15,
**caractérisé en ce que**
la dynamique du réglage diminue en cas d'augmentation de l'ensoleillement (P2) dirigé.

17. Procédé selon l'une quelconque des revendications 13 à 16,
**caractérisé en ce**
**qu'**une valeur de consigne de luminosité (S) est prédéfinie manuellement pour le réglage.

18. Procédé selon la revendication 17,
**caractérisé en ce que**,
après un déplacement de la valeur de consigne de luminosité (S) en cas d'ensoleillement (P2) dirigé élevé, le signal de sortie (A) pour l'activation de la source de lumière (2, 3) est modifié parallèlement à une modification ultérieure de l'ensoleillement (P2) dirigé.

19. Procédé selon la revendication 18,
**caractérisé en ce que**
le signal de sortie (A) pour l'activation de la source lumineuse (2, 3) est modifié de telle sorte que le rapport entre la lumière extérieure (La) et la luminosité présente dans le local soit conservé pour l'essentiel.
